# EUROPEAN PATENT SPECIFICATION

(11) **EP 2 027 635 B1**
(45) Date of publication and mention of the grant of the patent: **22.12.2010**
(21) Application number: 07769046.9
(22) Date of filing: 05.07.2007
(51) Int. Cl.: H02G 3/04, A47B 21/00, H01R 25/00

(54) **Turnable installation duct**
Drehbarer Installationskanal
Conduit d'installation pivotant

(30) Priority: 07.07.2006 SE 0601525
(43) Date of publication of application: 25.02.2009
(73) Proprietor: Schneider Electric Industries SAS, 92500 Rueil-Malmaison (FR)
(72) Inventor: DAHL, Sture, S-611 44 Nyköping (SE); KARLSSON, Sebastian, S-172 78 Sundbyberg (SE)
(74) Representative: Karlsson, Leif Karl Gunnar
(86) International application number: PCT/SE2007/050500
(87) International publication number: WO 2008/004975

(56) References cited:
- WO-A1-2004/091343
- DE-A1- 10 120 528
- DE-A1- 19 539 275
- DE-C1- 19 860 624

## Description

### Technical field

The present invention relates to a device which is intended for the installation of electrical coupling devices and which includes an installation duct and a supportive means, wherein the installation duct is adapted to accommodate electrical conductors and electrical outlets.

### Background of the invention

In keeping with the increase in the number of auxiliary devices for facilitating internal and external communication and to render the work carried out in work places more effective, there is also an increase in the number of electrical connections required for electrical, telephonic and computer connections in these work places. When the activity of the company concerned tends to require changes to be made at successively shorter intervals and when the work places are increasingly designed to suit individual purposes, it is highly desirable that the office locations are flexible and adaptable. Consequently, it is important in respect to present day office locations that electrical, telephone and data connections are readily accessible so as to enable mobile work stations and temporary work places to be created in a simple fashion, for instance in a conference room or a guest work place. At present, access to electric sockets is achieved generally through the aid of desk-mounted boxes. The table-mounted boxes are designed so that their fronts will be angled towards a user, so as to simplify connection of the box. A so-called table box may also constitute a supplement to the fixed installation in the case of a fixed workplace where the user needs to move a given apparatus between different work places, for example a mobile telephone charger, a portable computer charger, etc. One drawback with these earlier known table boxes is that they cannot be moved readily between different work stations and that they cannot be adapted for several users on different sides of a table due to the front of the box being angled towards a user. Another drawback with prior art table boxes is that they are often screwed, nailed or sometimes even glued firmly to a table top, therewith requiring some form of tool for both preparing the attachment point and for fixedly mounting the box to the tabletop. The use of nails screws and glue in this regard also results in ugly and undesirable marks in the tabletop, as is well known. There is thus a need for a table box which can be moved readily and which can be adapted for different types of work stations, particularly for workstations where more than one user is in need of the same table box.

DE-C- 198 60 624 discloses a turnable installation box according to the preamble of claim 1.

### Object of the invention

The object of the present invention is to provide a solution to the aforesaid problem and thus to propose an improved table box or installation device of the kind described above.

### Summary of the invention

The object of the invention is achieved by means of the present invention as defined in the independent claim 1. Suitable embodiments of the invention are defined in the subordinate claims.

Thus, there is defined, in accordance with the present invention, <page 2a>

Because the installation duct can be rotated about its longitudinal axis, the present invention affords the benefit of enabling the installation device and its electric outlets or sockets to be accessed more readily by more than one user, for example by two users seated on their respective side of a table. Moreover, it is possible for a user to adapt the electrical outlets such that they become more accessible to apparatus, for instance to electrical, telephonic and data apparatus. a device for installing electrical junction boxes which include an installation duct and support means, wherein the installation duct is adapted to accommodate electric conductors and electric outlets, and wherein the installation duct is rotatably mounted adjacent said support means for rotation about its longitudinal axis, and that the support means includes two support elements which are mounted at end portions of the installation duct; and in that at least one of said support elements includes an opening which in the mounted state of the support element includes a cable transit for facilitating mounting of cables through said opening and that respective support elements can be fastened with the aid of a fastener element wherein each support element includes an outwardly projecting portions which in the mounted position of the support element extends through an opening in the respective end portions of the installation duct and in towards the interior of said duct, **characterized in that** each outwardly projecting portion includes threads; and in that the installation device includes nut elements which can be screwed onto respective outwardly projecting parts for securing the support elements to the installation duct.

Furthermore, there is obtained in this way a more mobile installation device that can be readily placed in a user-desired position, and an installation device that can be readily moved without requiring tools for securing the device to the table or for preparing necessary device-attachment points. Because no tools are required with regard to the use of the device, the invention also affords the benefit that no ugly marks will remain on the table after moving the installation device to a different place. Mounting of cables through said opening is also facilitated and the cables will also accompany the installation duct as it rotates.

According to another beneficial embodiment of the invention, the support element can be fastened with the aid of a fastening element. This enables a user to fasten the installation device with the support elements directed upwards if he or she so desires, for example on a shelf, ceiling, roof, etc.

According to another beneficial embodiment, the surface of the support element which in the mounted state of the support is disposed against an underlying surface may be provided with a rubber element. This results in a satisfactory frictional force between the support element and the tabletop, meaning that the installation device will be supported steadily on the tabletop without risk of the device beginning to slide along the tabletop when the device is subjected to load.

According to another beneficial embodiment of the invention, the support elements may be joined together by an elongate element that extends generally parallel with said installation duct. This affords the benefit of increasing the stability of the installation device.

According to a further beneficial embodiment of the invention, the elongate element may be detachably mounted at the support element. The support element may also be detachably arranged at the end parts of the installation duct. This enables the installation device to be mounted and demounted when so desired, for instance in respect of after-installations.

According to another beneficial embodiment of the invention, the support elements may have adjustable lengths. By this is meant that the part of the support elements that extend generally at right angles to the longitudinal axis of the installation duct can be adjusted. This beneficially enables a user to adjust the height of the installation device to suit his or her purposes.

According to another beneficial embodiment of the invention, each support element can include an outwardly projecting portion which, in the mounted state of the support element, can extend through an opening in a respective end portion of the installation duct and in towards the interior of the duct. In addition, each outwardly projecting portion may include screw threads and the installation device may include nut elements which can be screwed onto respective outwardly projecting threaded portions. This enables the support elements to be properly mounted to the installation duct, thereby obtaining a steady installation device.

According to another beneficial embodiment of the invention, the installation device can include locking washers which, in the mounted or assembled state of the installation device may be disposed between the nut elements and the inner surface of the end portions of the installation duct, wherewith the washers may be designed so as to enable them to be detachably fastened to respective nut elements. The upper surface of the nut elements may also include axially extending recesses or openings distributed around the periphery of the nut element, and each locking washer may include at least one tab which can be folded down into at least one of said recesses in the assembled state of the locking washer. The benefit afforded by this arrangement is that the nut elements cannot be unscrewed after the installation duct has been subjected to rotation over a given time period.

According to another beneficial embodiment f the invention, the surface of an end portion that defines the opening of said end portion may be provided with axially extending grooves distributed around said surface and the outwardly projected part of a respective support element may include at least one resilient element that is disposed resiliently in said outwardly projecting part, wherewith at least one resilient element follows said groove radially. For instance, the resilient element may have the form of a ball or a cylinder. This enables the installation duct to be rotated stepwise about its longitudinal axis.

According to one beneficial embodiment of the invention, at least one of said support elements may be dividable into two parts. The benefit of producing the support elements in two parts instead of one part is that a user when so desiring is able to insert into the installation duct a contact which, because of its size, cannot be inserted through the opening in the support element. The use of two parts relieves the user of the necessity of first demounting the electrical contact from the cable in order to enable the cable to be passed through the opening in a support element, and then re-mounting the same contact on the cable so as to enable the contact to be mounted in the installation duct.

Another benefit afforded in this way is that it is simpler from a molding or casting aspect to produce a support element in two parts instead of in one part.

According to another beneficial embodiment of the invention, each end part of the surface which will face towards the inner surface of the installation duct in an assembled state is provided with stop shoulders and each locking washer is conveniently provided with at least one projection. This projection stops against said stop shoulders when a user rotates the installation channel excessively around its longitudinal axis and therewith prevents rotation of the installation duct.

### Brief description of the drawings

The invention will now be described in more detail with reference to an exemplifying embodiment thereof and also with reference to the figures of the accompanying drawings of which
Fig. 1 is a perspective view of an installation device according to the present invention;
Fig. 2 is a perspective view of one embodiment of a support element, a cable transit, an end portion with a locking washer and a nut element;
Fig. 3 is a front view of part of an assembled installation device; and
Fig. 4 is a perspective view of a support element according to figure 2, and shows the support element fitted to an end portion.

### Detailed description of the invention

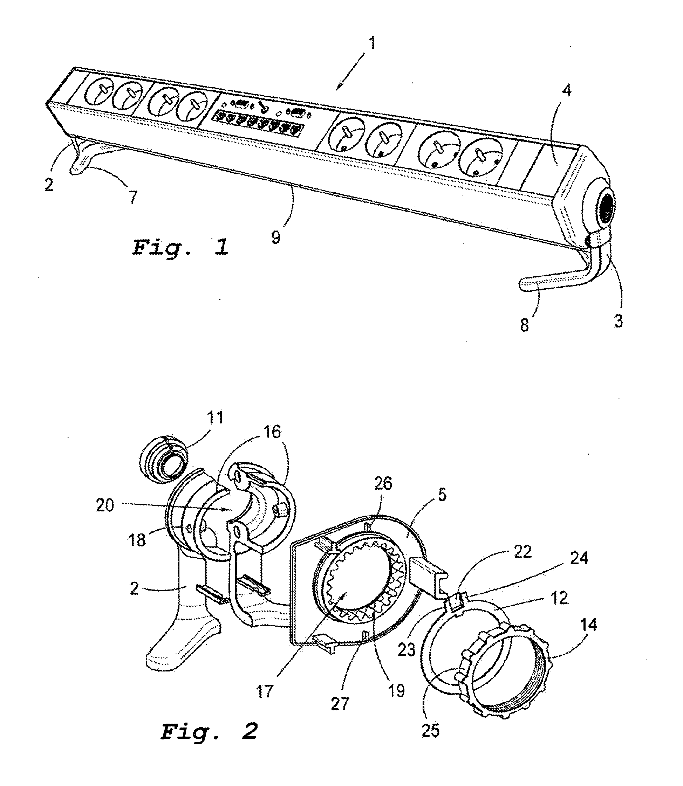

Figures 1-4 illustrate an exemplifying embodiment of the present invention applied in respect of means for the installation of electrical coupling devices. It will be understood, however, that the invention is in no way limited to these types of installation devices, but can be applied with any type of installation device.

Figure 1 is a perspective view of an installation device 1 according to the present invention.

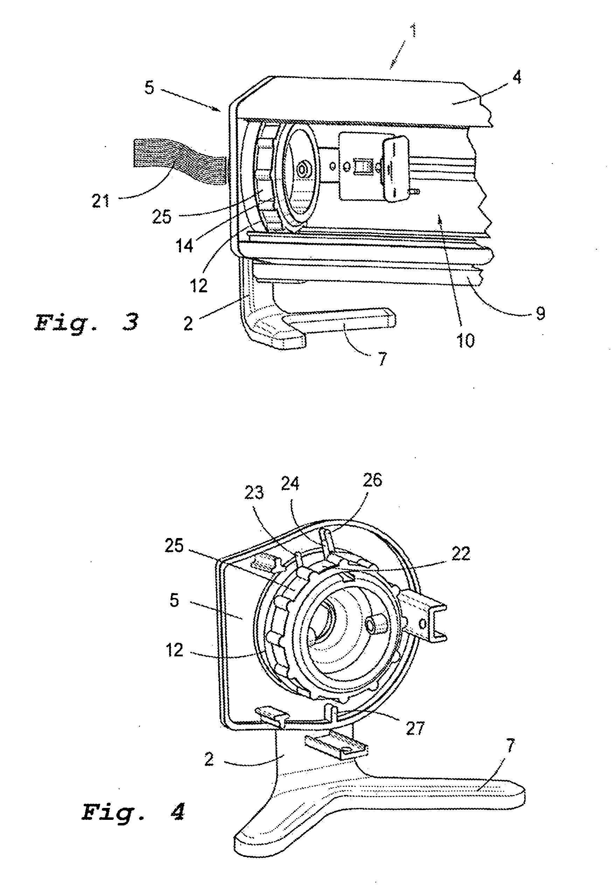

In the case of the illustrated embodiment, the installation device 1 includes two support elements 2, 3 which are detachably disposed at respective end portions 5, 6 of an installation duct 4. In the case of the illustrated embodiment the two support elements 2, 3 include two feet 7, 8 which are angled towards one another so that the installation duct 4 will stand stably against an underlying surface. The installation duct 4 is rotatably mounted on its two support elements 2, 3. In order to further stabilize the installation device 1, the two support elements 2, 3 are mutually joined by an elongate element 9. In the case of the illustrated embodiment the elongate element 9 is detachably secured at the two support elements 2, 3 and extends generally parallel with the installation duct 4. A number of recesses are provided at the front opening 10 of the installation duct 4 (as will be evident from figure 3). The number of recesses that shall be included in the front opening 10 of the installation duct 4 and the type of recesses provided may, of course, be controlled in accordance with the wishes of a user.

Figure 2 is a perspective view of one embodiment of a support element and a cable transit 11 and an end portion 5 provided with a locking washer 12 and a nut element 14. The figure shows the various components in a non-assembled state. In the case of the illustrated embodiment the support element 2 is comprised of two parts including a threaded outwardly projecting part 16. When fastening the support element 2 to the installation duct 4, the outwardly projecting part 16 is inserted through an opening 17 in the end portion 5 of the installation duct 4 and screwed fast with the aid of the nut element 14. In order to prevent the nut element 14 from backing off after repeated rotations of the installation duct 4, a locking washer 12 is placed between the inner surface of the end portion 5 and the nut element 14 and is finally detachably fastened to the nut element 14. The outer surface of the outwardly projecting part 16 of the support element 2 is provided with a ball 18 that is resiliently mounted in the outwardly projecting portion 16. The ball 18 is intended to follow axially extending grooves 19 provided in the surface of the end portion 5 that defines the opening 17 of the end portion 5, so as to enable the installation duct 4 to be rotated stepwise about its longitudinal axis. In order to facilitate mounting of cables in the installation duct 4 both the support element 2 and the end portion 5 are provided with an opening 20, 17 at least on one side of the installation duct 4.

Figure 3 is a front view of part of an installation device 1 in a mounted state. In this view, the front opening 10 of the installation duct 4 is open thereby enabling it to be seen how the support element 2 has been mounted at one end portion 5 of the installation duct 4 with the aid of a nut element 14 that has been fastened to the outwardly projecting portion 16 (not visible) of the support element 2.

Figure 3 also shows how a cable 21, or cable stocking, passes through the rotational center of the installation duct 4, through the opening 17 in the end portion and the opening 20 in the support element. Figure 3 also shows how the support element 2 is joined to a second support element 3 (not visible in figure 3) with the aid of an elongate element 9 that extends horizontally with and beneath said installation duct 4.

Figure 4 is a perspective view of a support element 2 mounted on an end portion 5. The figure shows only one of the two support elements 2, 3 in a mounted state. Neither does figure 4 show the elongate element 9 that joins together the support elements 2, 3. In the case of this embodiment, the locking washer 12 is provided with a tab 22 and two projections 23, 24. In the illustrated case, the outer surface of the nut element 14 includes a number of axial openings 25 distributed around the periphery of the nut element 14. The figure shows the tab 22 folded down into one of the openings 25 on the nut element 14, thereby preventing the nut element 14 from "backing-off" or unscrewing.
Figure 4 also shows that the installation duct 4 has been rotated to one of its two end positions, by virtue of one projection 24 being shown in engagement with a stop shoulder 24 on the end portion 5. In the case of the illustrated embodiment, the end portion 5 includes two stop shoulders 26, 27 which define two stop positions. It is not possible to further rotate the installation duct 4 in these stop positions, which thus prevent rotation of the installation duct 4 when in these positions. As will be understood, the end portion 6 may be of the same design as the end portion 5, with two stop shoulders 26, 27 that define two stop positions.

## Claims

1. A device (1) for installing electrical junction boxes which include an installation duct (4) and support means, wherein the installation duct (4) is adapted to accommodate electric conductors and electric outlets, and wherein the installation duct (4) is rotatably mounted adjacent said support means for rotation about its longitudinal axis, and that the support means includes two support elements (2, 3) which are mounted at end portions (5, 6) of the installation duct (4); and in that at least one of said support elements (2, 3) includes an opening (20) which in the mounted state of the support element (2, 3) includes a cable transit (11) for facilitating mounting of cables through said opening (20) and that respective support elements (2, 3) can be fastened with the aid of a fastener element wherein each support element (5, 6) includes an outwardly projecting portion (16) which in the mounted position of the support element (5, 6) extends through an opening (17) in the respective end portions (5, 6) of the installation duct (4) and in towards the interior of said duct (4), **characterized in that** each outwardly projecting portion (16) includes threads; and **in that** the installation device (4) includes nut elements (14) which can be screwed onto respective outwardly projecting parts (16) for securing the support elements (5, 6) to the installation duct (4).

2. An installation device according to claim 1, **characterized in that** the surface of the support element (2, 3) that faces towards an underlying support element when fitted includes a rubber element.

3. An installation device according to claims 2, **characterized in that** the support elements (2, 3) are joined together by means of an elongate element (9) which extends generally parallel with the installation duct (4).

4. An installation device according to claim 3, **characterized in that** the elongate element (9) is detachably connected to said support elements (2, 3).

5. An installation device according to claim 2, **characterized in that** said support elements (2, 3) are disposed detachably at the end portions (5, 6) of the installation duct (4).

6. An installation device according to any one of claims 1-5, **characterized in that** the support elements (5, 6) have an adjustable length.

7. An installation device according any one of claims 1-6, **characterized in that** the device (1) includes locking washers (12) which in the mounted state of the installation device (1) are disposed between the nut element (14) and the inner surface of respective end portions (5, 6) of the installation duct (4), wherein the locking washers (12) are adapted to enable them to be fastened detachably at respective nut elements (14) so as to prevent the nut elements (14) from unscrewing

8. An installation device according to any one of claims 1-7, **characterized in that** the outer surface of respective nut elements (14) is provided with axial openings (25) around the periphery of the nut element (14); and **in that** each locking washer (12) includes at least one tab (22) which can be folded down into at least one of said openings (25) in the mounted position of the locking washer (12).

9. An installation device according to any one of claims 1-8, **characterized in that** the surface of an end portion (5, 6) that defines the opening (17) in the end portion (5, 6) includes axially extending openings (19) distributed around said surface; and **in that** the outwardly projecting portion (16) of respective support elements (2, 3) includes at least one resilient element (18) which is mounted resiliently in said outwardly projecting part (16), wherein at least one resilient element (18) follows said grooves (19) radially, therewith enabling the installation channel (1) to be rotated stepwise about its longitudinal axis.

10. An installation device according to claim 9, **characterized in that** the resilient element (18) is a ball.

11. An installation device according to any one of claims 1-10, **characterized in that** at least one of said support elements (2, 3) can be divided into two parts.

12. An installation device according to any one of claims 7-11, **characterized in that** each end portion (5, 6) of the surface which faces in towards the interior of the installation duct (1) when mounted is provided with stop shoulders (26, 27); and **in that** each locking washer (12) includes at least one projection (23, 24) which when the installation duct (1) is rotated about its longitudinal axis stops against said stop shoulders (26, 27) so as to prevent further rotation of the installation duct (1).

## Patentansprüche

1. Vorrichtung (1) zum Installieren elektrischer Anschlusskästen, die einen Installationskanal (4) und ein Lagermittel aufweisen, wobei der Installationskanal (4) zur Aufnahme elektrischer Leiter und elektrischer Auslässe angepasst ist, und wobei der Installationskanal (4) benachbart dem Lagermittel zur Drehung um seine Längsachse drehbar montiert ist, und dass das Lagermittel zwei Lagerelemente (2, 3) aufweist, die an Endabschnitten (5, 6) des Installationskanals (4) montiert sind; und dass zumindest eines der Lagerelemente (2, 3) eine Öffnung (20) aufweist, die im montierten Zustand des Lagerelementes (2, 3) einen Kabeldurchgang (11) zur Erleichterung der Montage von Kabeln durch die Öffnung (20) aufweist, und dass jeweilige Lagerelemente (2, 3) mit Hilfe eines Befestigungselementes befestigt werden können, wobei jedes Lagerelement (5, 6) einen nach außen vorragenden Abschnitt (16) aufweist, der sich in der montierten Position des Lagerelementes (5, 6) durch eine Öffnung (17) in den jeweiligen Endabschnitten (5, 6) des Installationskanals (4) und in Richtung zu dem Inneren des Kanals (4) erstreckt,
**dadurch gekennzeichnet, dass**
jeder nach auswärts vorragende Abschnitt (16) ein Gewinde aufweist; und dass die Installationsvorrichtung (4) Mutternelemente (14) aufweist, die auf jeweilige nach außen vorragende Teile (16) geschraubt werden können, um die Lagerelemente (5, 6) an dem Installationskanal (4) anzubringen.

2. Installationsvorrichtung nach Anspruch 1 ,
**dadurch gekennzeichnet, dass**
die Fläche des Lagerelementes (2, 3), die im eingepassten Zustand in Richtung eines darunterliegenden Lagerelementes weist, ein Gummielement aufweist.

3. Installationsvorrichtung nach Anspruch 2,
**dadurch gekennzeichnet, dass**
die Lagerelemente (2, 3) mittels eines länglichen Elementes (9), das sich allgemein parallel zu dem Installationskanal (4) erstreckt, miteinander verbunden sind.

4. Installationsvorrichtung nach Anspruch 3 ,
**dadurch gekennzeichnet, dass**
das längliche Element (9) lösbar mit den Lagerelementen (2, 3) verbunden ist.

5. Installationsvorrichtung nach Anspruch 2,
**dadurch gekennzeichnet, dass**
die Lagerelemente (2, 3) lösbar an den Endabschnitten (5, 6) des Installationskanals (4) angeordnet sind.

6. Installationsvorrichtung nach einem der Ansprüche 1 bis 5 ,
**dadurch gekennzeichnet, dass**
die Lagerelemente (5, 6) eine einstellbare Länge besitzen.

7. Installationsvorrichtung nach einem der Ansprüche 1 bis 6 ,
**dadurch gekennzeichnet, dass**
die Vorrichtung (1) Sicherungsscheiben (12) aufweist, die in dem montierten Zustand der Installationsvorrichtung (1) zwischen dem Mutternelement (14) und der Innenfläche jeweiliger Endabschnitte (5, 6) des Installationskanals (4) angeordnet sind, wobei die Sicherungsscheiben (12) derart angepasst sind, um zu ermöglichen, dass diese lösbar an jeweiligen Mutternelementen (14) befestigt werden können, um so ein Abschrauben der Mutternelemente (14) zu verhindern.

8. Installationsvorrichtung nach einem der Ansprüche 1 bis 7 ,
**dadurch gekennzeichnet, dass**
die Außenfläche der jeweiligen Mutternelemente (14) mit axialen Öffnungen (25) um den Umfang des Mutternelementes (14) herum versehen ist; und dass jede Sicherungsscheibe (12) zumindest eine Lasche (22) aufweist, die in zumindest eine der Öffnungen (25) in der montierten Position der Sicherungsscheibe (12) heruntergeklappt werden kann.

9. Installationsvorrichtung nach einem der Ansprüche 1 bis 8 ,
**dadurch gekennzeichnet, dass**
die Fläche eines Endabschnittes (5, 6), die die Öffnung (17) in dem Endabschnitt (5, 6) definiert, sich axial erstreckende Öffnungen (19) aufweist, die um die Fläche verteilt sind; und dass der sich nach außen vorragende Abschnitt (16) der jeweiligen Lagerelemente (2, 3) zumindest ein elastisches Element (18) aufweist, das elastisch in dem nach außen vorragenden Teil (16) montiert ist, wobei zumindest ein elastisches Element (18) den Nuten (19) radial folgt, wodurch ermöglicht wird, dass der Installationskanal (1) stufenweise um seine Längsachse gedreht werden kann.

10. Installationsvorrichtung nach Anspruch 9 ,
**dadurch gekennzeichnet, dass** das elastische Element (18) eine Kugel ist.

11. Installationsvorrichtung nach einem der Ansprüche 1 bis 10,
**dadurch gekennzeichnet, dass**
zumindest eines der Lagerelemente (2, 3) in zwei Teile geteilt werden kann.

12. Installationsvorrichtung nach einem der Ansprüche 7 bis 11,
**dadurch gekennzeichnet, dass**
jeder Endabschnitt (5, 6) der Fläche, die im montierten Zustand in Richtung des Inneren des Installationskanals (1) weist, mit Stoppschultern (26, 27) versehen ist; und dass jede Sicherungsscheibe (12) zumindest einen Vorsprung (23, 24) aufweist, der, wenn der Installationskanal (1) um seine Längsachse gedreht wird, gegen die Stoppschultern (26, 27) stoppt, um so eine weitere Drehung des Installationskanals (1) zu verhindern.

## Revendications

1. Dispositif (1) pour installer des boîtes de distribution électrique qui comprennent un conduit d'installation (4) et des moyens de support, dans lequel le conduit d'installation (4) est adapté pour loger des conducteurs électriques et des prises électriques, et dans lequel le conduit d'installation (4) est monté en rotation adjacent auxdits moyens de support pour tourner autour de son axe longitudinal, les moyens de support comprenant deux éléments de support (2, 3) qui sont montés au niveau des parties d'extrémité (5, 6) du conduit d'installation (4); et au moins l'un desdits éléments de support (2, 3) comprend une ouverture (20) qui, dans l'état monté de l'élément de support (2, 3), comprend un passage de câbles (11) pour faciliter le montage de câbles à travers ladite ouverture (20) et en ce que les éléments de support (2, 3) respectifs peuvent être fixés à l'aide d'un élément de fixation, dans lequel chaque élément de support (5, 6) comprend une partie faisant saillie vers l'extérieur (16) qui, dans la position montée de l'élément de support (5, 6), s'étend à travers une ouverture (17) dans les parties d'extrémité (5, 6) respectives du conduit d'installation (4) et vers l'intérieur dudit conduit (4), **caractérisé en ce que** chaque partie faisant saillie vers l'extérieur (16) comprend des filets; et **en ce que** le dispositif d'installation (4) comprend des éléments formant écrous (14) qui peuvent être vissés sur les parties faisant saillie vers l'extérieur (16) respectives pour fixer les éléments de support (5, 6) au conduit d'installation (4).

2. Dispositif d'installation selon la revendication 1, **caractérisé en ce que** la surface de l'élément de support (2, 3) qui est orientée vers un élément de support sous-jacent lorsqu'il est assemblé comprend un élément en caoutchouc.

3. Dispositif d'installation selon la revendication 2, **caractérisé en ce que** les éléments de support (2, 3) sont joints l'un à l'autre au moyen d'un élément allongé (9) qui s'étend généralement parallèlement au conduit d'installation (4).

4. Dispositif d'installation selon la revendication 3, **caractérisé en ce que** l'élément allongé (9) est relié de manière détachable auxdits éléments de support (2, 3).

5. Dispositif d'installation selon la revendication 2, **caractérisé en ce que** lesdits éléments de support (2, 3) sont disposés de manière détachable au niveau des parties d'extrémité (5, 6) du conduit d'installation (4).

6. Dispositif d'installation selon l'une quelconque des revendications 1 à 5, **caractérisé en ce que** les éléments de support (5, 6) ont une longueur ajustable.

7. Dispositif d'installation selon l'une quelconque des revendications 1 à 6, **caractérisé en ce que** le dispositif (1) comprend des rondelles de blocage (12) qui, dans l'état monté du dispositif d'installation (1), sont disposées entre l'élément formant écrou (14) et la surface intérieure des parties d'extrémité (5, 6) respectives du conduit d'installation (4), dans lequel les rondelles de blocage (12) sont adaptées pour qu'elles puissent être fixées de manière détachable aux éléments formant écrous (14) respectifs de manière à empêcher le dévissage des éléments formant écrous (14).

8. Dispositif d'installation selon l'une quelconque des revendications 1 à 7, **caractérisé en ce que** la surface extérieure des éléments formant écrous (14) respectifs est pourvue d'ouvertures axiales (25) autour de la périphérie de l'élément formant écrou (14) ; et **en ce que** chaque rondelle de blocage (12) comprend au moins une languette (22) qui peut être pliée dans au moins l'une desdites ouvertures (25) dans la position montée de la rondelle de blocage (12).

9. Dispositif d'installation selon l'une quelconque des revendications 1 à 8, **caractérisé en ce que** la surface d'une partie d'extrémité (5, 6) qui définit l'ouverture (17) dans la partie d'extrémité (5, 6) comprend des ouvertures (19) s'étendant axialement réparties autour de ladite surface ; et **en ce que** la partie faisant saillie vers l'extérieur (16) des éléments de support (2, 3) respectifs comprend au moins un élément élastique (18) qui est monté de manière élastique dans ladite partie faisant saillie vers l'extérieur (16), dans lequel au moins un élément élastique (18) suit lesdites rainures (19) radialement, permettant de ce fait la rotation du canal d'installation (1) par pas autour de son axe longitudinal.

10. Dispositif d'installation selon la revendication 9, **caractérisé en ce que** l'élément élastique (18) est une bille.

11. Dispositif d'installation selon l'une quelconque des revendications 1 à 10, **caractérisé en ce qu'**au moins l'un desdits éléments de support (2, 3) peut être divisé en deux parties.

12. Dispositif d'installation selon l'une quelconque des revendications 7 à 11, **caractérisé en ce que** chaque partie d'extrémité (5, 6) de la surface qui est orientée vers l'intérieur du conduit d'installation (1) lorsqu'il est monté est pourvue d'épaulements d'arrêt (26, 27) ; et **en ce que** chaque rondelle de blocage (12) comprend au moins une protubérance (23, 24) qui, lorsque le conduit d'installation (1) est tourné autour de son axe longitudinal, s'arrête contre lesdits épaulements d'arrêt (26, 27) de manière à empêcher une rotation supplémentaire du conduit d'installation (1).
